# EUROPÄISCHE PATENTSCHRIFT

(11) **EP 0 534 250 B1**
(45) Veröffentlichungstag und Bekanntmachung des Hinweises auf die Patenterteilung: **18.12.1996**
(21) Anmeldenummer: 92115586.7
(22) Anmeldetag: 11.09.1992
(51) Int. Cl.: H02H 11/00, H02H 9/00

(54) **Verfahren und Vorrichtung zum Absichern eines Wechselstromkreises**
Method and device to protect an AC circuit
Procédé et dispositif pour protéger un circuit courant alternatif

(30) Priorität: 27.09.1991 DE 4132208
(43) Veröffentlichungstag der Anmeldung: 31.03.1993
(73) Patentinhaber: FRAUNHOFER-GESELLSCHAFT ZUR FÖRDERUNG DER ANGEWANDTEN FORSCHUNG E.V., 80636 München (DE)
(72) Erfinder: Konstanzer, Michael, W-7800 Freiburg (DE)

(56) Entgegenhaltungen:
- WO-A-90/12439
- US-A- 4 131 927
- US-A- 4 517 618

## Beschreibung

Die Erfindung bezieht sich auf ein Verfahren und eine Vorrichtung zum Absichern eines Wechselstromkreises, wobei der Spannungseffektivwert im Laststromkreis, insbesondere durch Vergrößern des Stromflußwinkels, nach dem Einschalten allmählich gesteigert wird und wobei bei Überschreitung eines vorgebbaren Laststromes der Laststromkreis unterbrochen wird.

Es ist bereits ein Verfahren zur Reduzierung des Einschaltstromstoßes beim Betreiben einer induktivitätsbehafteten Last bekannt, bei dem die effektive Spannung an der Last durch Vergrößern der Spannungshalbwellenanschnitte vergrößert wird und dabei der Strom gemessen wird. Wird dabei ein bestimmter Stromschwellwert überschritten, so wird davon ausgegangen, daß sich die induktive Last bezüglich ihrer Magnetisierung an einem Endbereich der Hysteresekurve befindet. Ab diesem Zeitpunkt wird dann mit einer gegenpoligen und ihrem Effektivwert größeren Spannung eingeschaltet (siehe WO91/17597, veröffentlicht am 14/11/91, bzw. die entsprechende EP-A-527 137).

Bei der Strommessung wurde bei Überschreiten des Stromschwellwertes immer davon ausgegangen, daß die Magnetisierung sich in der Sättigung also an einem Ende der Hysteresekurve befindet.Da, hierbei aber nicht zwischen Wirkstrom und Blindstrom unterschieden wurde, konnte somit auch nicht erkannt werden, ob gegebenenfalls im Wechselstromkreis eine Überlast oder ein Kurzschluß vorhanden ist. Auch dies führt beim allmählichen Erhöhen des Stromflußwinkels zu einem Überschreiten des Stromschwellwertes und zu einem anschließenden Einschalten. Dies führte dann zum Auslösen einer Sicherung.

Aufgabe der vorliegenden Erfindung ist es, ein Verfahren und eine Vorrichtung zu schaffen, wobei einerseits ein Einschalten einer induktivitätsbehafteten Last ohne Auftreten von unerwünscht hohen Einschaltströmen (Inrush) möglicht ist und andererseits soll auch zwischen dem Auftreten des durch die magnetische Sättigung hervorgerufenen Stromes und einem Überlaststrom zum Beispiel in Folge eines Kurzschlusses im Wechselstromkreis sicher unterschieden und entsprechend unterschiedlich reagiert werden können.Außerdem soll insgesamt die Netzbelastung beim Einschalten auch im Falle eines Kurzschlußes klein gehalten werden.

Zur Lösung dieser Aufgabe wird erfindungsgemäß insbesondere vorgeschlagen, daß nach dem Einschalten zum Lastvorprüfen jeweils mit Beginn einer reduzierten Spannungsbeaufschlagung der Wirkstrom innerhalb eines vorgebbaren, vor dem nachfolgenden Nulldurchgang der Wechselspannung endenden Zeitfensters gemessen und bei Überschreitung eines vorgebbaren Wirkstromgrenzwertes der Einschaltvorgang abgebrochen wird.
Durch die zu einem ganz bestimmten Zeitpunkt, nämlich unmittelbar beim beziehungsweise nach dem Einschalten erfolgenden Wirkstrommessung kann nun erkannt werden, ob eine Überlast oder ein Kurzschluß im Laststromkreis vorliegt, da in diesem Falle der innerhalb des Zeitfensters gemessene Wirkstrom überproportional beim allmählichen Steigern des Spannungseffektivwertes im Laststromkreis anwächst.

Der vorgebbare Wirkstromgrenzwert und damit die Auslöseschwelle für das Erkennen einer Überlast ist so vorgesehen, daß er wesentlich über dem im Normalbetrieb auftretenden Wirkstrom liegt.
Das erfindungsgemäße Verfahren zum Absichern eines Wechselstromkreises kann unabhängig davon eingesetzt werden, ob sich im Laststromkreis eine ohmsche oder eine induktivitätsbehaftete Last befindet.

Befindet sich im Laststromkreis eine induktivitätsbehaftete und mit einem magnetisierbaren Kern versehene Last, ist nach einer Weiterbildung der Erfindung vorgesehen, daß zusätzlich zu dem Wirkstrom der Blindstrom im Bereich des Nulldurchganges der Wechselspannung gemessen wird und daß zur Reduzierung des Einschaltstromstosses bei Überschreiten eines vorgebbaren Blindstromgrenzwertes während des Vergrößerns des Spannungseffektivwertes die Last nach Auftreten dieses gemessenen Grenzwertes mit einer zu der beim Auftreten des Blindstromgrenzwertes anliegenden Spannung gegenpoligen und in ihrem Effektivwert größeren Spannung beaufschlagt wird.
Durch diese Weiterbildung der Erfindung kann zusätzlich zur Lastvorprüfung auf Überlast bzw. Kurzschluß anhand des Wirkstromes, ein Einschalten der Last praktisch ohne Einschalt-Blindstromstoß vorgenommen werden. Dies erfolgt durch die zeitlich separate Messung einerseits des Wirkstromes und andererseits des dazu phasenverschobenen Blindstromes, wobei nach Auftreten eines bestimmten Blindstromgrenzwertes, dann passend zur Magnetisierung, die induktivitätsbehaftete Last eingeschaltet werden kann.
Durch diese "Synchronisation" werden hohe Blindströme (Inrush) beim Einschalten vermieden.
Bisher konnte das Problem auftreten, daß beim allmählichen Vergrößern des Spannungseffektivwertes und aufgrund eines dabei auftretenden Stromgrenzwertes auf den passenden Zeitpunkt zum vollen Einschalten der Last ans Netz geschlossen wurde.

Dieser Stromgrenzwert konnte aber auch ein hoher Wirkstrom infolge einer Überlast im Laststromkreis sein, so daß dann beim vollen Einschalten Sicherungselemente ausgelöst wurden und hohe Stromspitzen auftraten.
Durch die selektive Messung von Wirk- und Blindstrom wird dies aber sicher verhindert, da nur dann voll eingeschaltet wird, wenn zunächst die Wirkstrommessung keine Überlast ergeben hat.

Die Erfindung betrifft auch eine Vorrichtung zur Durchführung des erfindungsgemäßen Verfahrens, zur Absicherung eines Wechselstromkreises, wobei diese Vorrichtung einen im Laststromkreis befindlichen und mit einer Phasenan- oder Abschnittsteuerung verbundenen Wechselstromschalter als Stellglied zum Erzeugen einer reduzierten Spannungsbeaufschlagung sowie eine Ablaufsteuerung zum Verändern, insbesondere Vergrößern der Effektivspannung an der einzuschaltenden Last aufweist. Diese Vorrichtung ist erfindungsgemäß insbesondere dadurch gekennzeichnet, daß sie eine im Laststromkreis befindliche Strommeßeinrichtung, eine mit einem Zeitglied zusammenarbeitende Meßfreigabeeinrichtung zur Meßfreigabe mit Beginn einer Spannungsbeaufschlagung der Last über einen vorgebbaren Zeitabschnitt zur selektiven Erfassung des Wirkstromscheitel- oder Spitzenwertes bei der reduzierten Spannungsbeaufschlagung sowie eine Meßauswerteeinrichtung zum Last vorprüfen aufweist.
Die Messung des Stromes bei der jeweiligen Spannungsbeaufschlagung der Last mit zum Beispiel angeschnittenen Spannungshalbwellen erfolgt hier innerhalb eines Zeitfensters, in dem ein Wirkstrom auftreten kann. Dieses Zeitfenster beginnt mit der jeweiligen Spannungsbeaufschlagung und endet mit Abstand vor dem nachfolgenden Spannungsnulldurchgang, um Einflüsse durch den sich aufbauenden Blindstrom zu vermeiden. Das Meßzeitfenster ist dabei so kurz wie möglich bemessen und nur so breit, daß eine sichere Wirkstrommessung möglich ist.

Eine Weiterbildung der Erfindung sieht vor, daß zusätzlich zu der Wirkstrommeßeinrichtung eine Blindstrommeßeinrichtung mit einem von der Phasenan- oder Abschnittsteuerung angesteuerten Zeitglied und einer davon angesteuerten Meßfreigabeeinrichtung zur Meßfreigabe mit Beginn eines Spannungsnulldurchganges über einen vorgebbaren Zeitabschnitt sowie eine Blindstrom-Meßauswerteeinrichtung vorgesehen sind.
Mit dieser zusätzlichen Meßeinrichtung kann der auftretende Blindstrom separat vom Wirkstrom gemessen werden, da das hierfür vorgesehene Meß-Zeitfenster erst mit dem Nulldurchgang der Wechselspannung beginnt. Die Messung des Blindstromes wird zum Inrush-freien Einschalten der Last verwendet, das heißt ohne das Auftreten eines hohen Einschalt-Blindstromstoßes.

Zusätzliche Ausgestaltungen der Erfindung sind in den weiteren Unteransprüchen aufgeführt. Nachstehend ist die Erfindung mit ihren wesentlichen Einzelheiten anhand der Zeichnungen noch näher erläutert.

Es zeigt:
- Fig. 1: ein Blockschaltbild mit einer Wirkstrommeßeinrichtung zur Absicherung eines Wechselstromkreises,
- Fig. 2: ein gegenüber Fig. 1 erweitertes Blockschaltbild mit einer zusätzlichen Blindstrommeßeinrichtung,
- Fig. 3: eine detailliertere Blockschaltbild-Darstellung etwa entsprechend Fig. 1,
- Fig. 4: eine Schaltungserweiterung mit einem zusätzlichen Funktionsblock für eine träge Sicherung,
- Fig. 5: ein Blockschaltbild einer Blindstrommeßeinrichtung,
- Fig. 6: ein Diagramm mit Darstellung der Spannung und der auftretenden Ströme innerhalb eines Laststromkreises,
- Fig. 7: mehrere Diagramme mit Signalverläufen zum zeitlich definierten Einschalten eines zum Stellglied gehörenden Relais,
- Fig. 8: ein Stellglied mit einem elektromechanischen Schalter und einem Thyristor sowie zugehöriger Ansteuerung und
- Fig. 9: ein Stellglied mit zwei antiparallel geschalteten Thyristoren und einem elektromechanischen Schalter sowie einer Ansteuerung,
- Fig.10: mehrere Diagramme analog zu Fig. 7 und
- Fig.11: eine abgeänderte Schaltung analog zu Fig. 8.

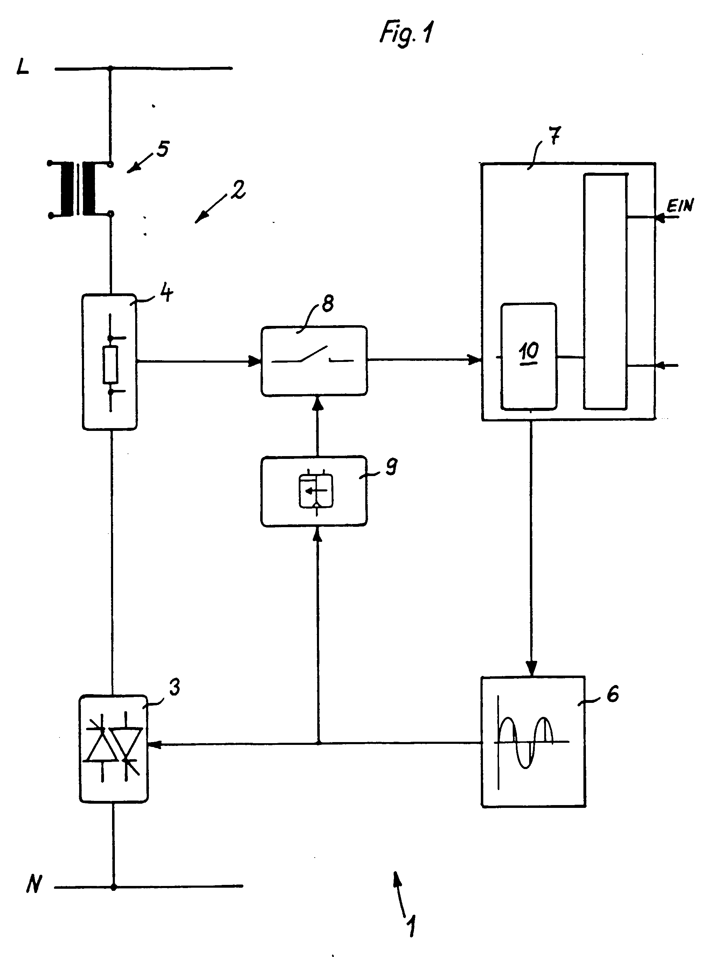

Eine in Figur 1 gezeigte Vorrichtung 1 dient zur Absicherung eines Wechselstromkreises 2, in dem sich hier in Reihe geschaltet ein elektronischer Wechselstromschalter 3 als Stellglied, eine Strommeßeinrichtung 4 sowie eine Last 5 befinden. Die Last ist hier durch einen Transformator, also einer induktivitätsbehafteten und mit einem magnetisierbaren Kern versehenen Last gebildet.

Mit Hilfe der Vorrichtung 1 kann vor dem vollen Einschalten der Last 2 an ein die Leitungen L und N aufweisenden Wechselstromnetz überprüft werden, ob eine Überlast, beispielsweise in Form eines Kurzschlusses vorliegt. Dazu wird der Wirkstrom gemessen. Die Wirkstrommessung erfolgt dabei innerhalb von angeschnittenen Spannungshalbwellen, so daß der Effektivwert der treibenden Spannung noch vergleichsweise klein ist. Wird bei dieser Überprüfung des Wirkstromes bei geringer effektiver Spannung ein vorgebbarer Wirkstromgrenzwert überschritten, so wird der Einschaltvorgang abgebrochen.

Der elektronische Wechselstromschalter 3 ist im Ausführungsbeispiel durch zwei antiparallel geschaltete Thyrostoren oder gegebenenfalls durch einen Triac gebildet, die von einer Phasenanschnittsteuerung 6 angesteuert sind.

Zu der Vorrichtung 1 gehört noch eine Ablaufsteuerung 7, eine Meßfreigabeeinrichtung 8 sowie ein Zeitglied 9.

Nach dem Einschalten durch einen externen Einschaltbefehl bei der Ablaufsteuerung 7 werden über diese von der Phasenanschnittsteuerung 6 Zündimpulse an den Wechselstromschalter 3 gegeben, wobei zunächst mit großem Anschnittwinkel, das heißt mit geringem Stromflußwinkel begonnen wird. Mit jedem Zündimpuls wird gleichzeitig auch das Zeitglied 9 angesteuert, welches seinerseits die Meßfreigabeeinrichtung für ein bestimmtes Zeitfenster durchschaltet.
Die Meßfreigabeeinrichtung 8 befindet sich zwischen der Strommeßeinrichtung 4 und der Ablaufsteuerung 7, die auch eine Wirkstrom-Meßauswerteeinrichtung 10 beinhaltet.
Das Zeitglied 9 ist so eingestellt, daß die Messung des Wirkstromes, beginnend mit dem jeweiligen Zündimpuls nur solange erfolgt, daß eine sichere Messung möglich ist. Gleichzeitig mit dem Beginn der Spannungsbeaufschlagung beginnt sich nämlich auch ein Blindstrom aufzubauen, welcher bei zu großer Breite des Wirkstrom-Zeitfensters das Wirkstrommeßergebnis beeinflussen würde.
In praktischen Versuchen haben sich Meßzeiten von kleiner als 0,2 Millisekunden als günstig herausgestellt.

In der Wirkstrom-Meßauswerteeinrichtung 10 wird überprüft, ob der gemessene Wirkstrom einen vorgebbaren Wirkstromgrenzwert überschreitet oder nicht. Wird der Grenzwert nicht erreicht, so deutet dies darauf hin, daß keine Überlast im Wechselstromkreis 2 vorhanden ist, so daß dann eine volle Spannungsbeaufschlagung mit voll durchgeschaltetem Stellglied 3 erfolgen kann.
Wird der vorgegebene Wirkstromgrenzwert jedoch bei der im Effektivwert reduzierten Spannungsbeaufschlagung überschritten, so wird der Einschaltvorgang abgebrochen.

Die Überprüfung des Laststromkreises auf Überlast kann im Bedarfsfalle innerhalb einer Wechselspannungsperiode, gegebenenfalls auch einer halben Wechselspannungsperiode erfolgen.

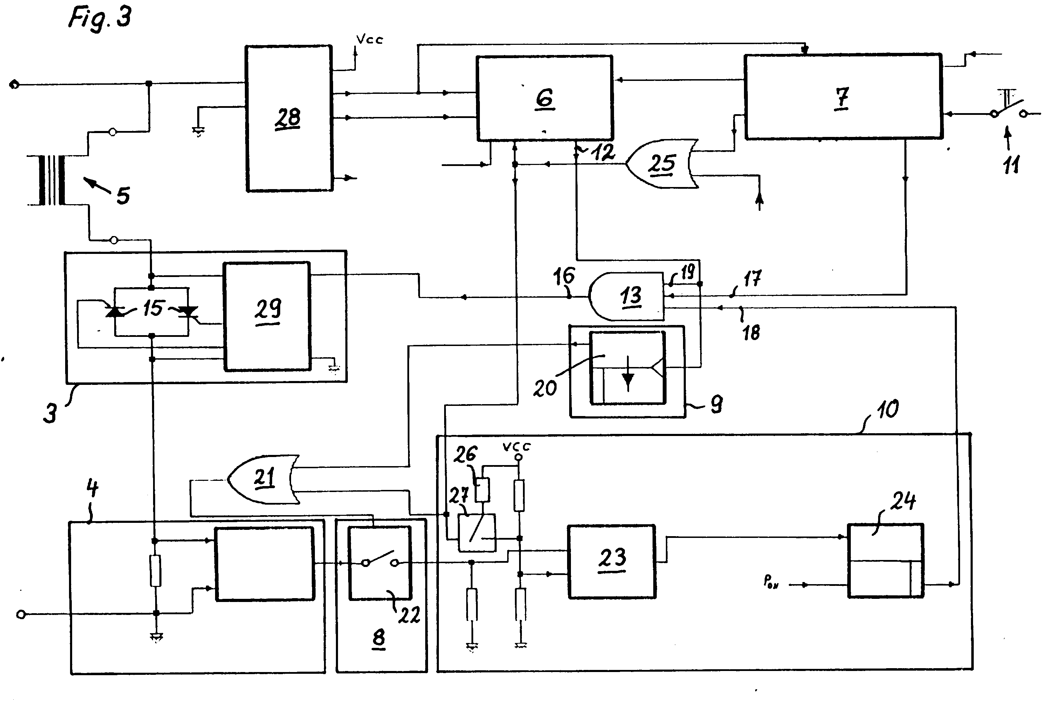

Figur 3 zeigt das in Fig. 1 gezeigte Blockschaltbild in detaillierter Ausführung.
Wird an die Ablaufsteuerung 7 über den Schalter 11 ein Einsignal gegeben, so gibt diese an die nachfolgende Phasenanschnittsteuerung 6 eine Steuerspannung und die Phasenanschnittsteuerung erzeugt an ihrem Ausgang 12 Zündimpulse. Diese Zündimpulse gelangen über ein UND-Gatter 13 und einen Zündtreiber 29 zu den im Laststromkreis befindlichen und den Wechselstromschalter 3 bildenden Thyristoren 15.
Die Zündimpulse sind dabei so bemessen, daß zunächst nur kleine, angeschnittene Halbwellenzipfel erzeugt werden, die allmählich vergrößert werden. Dies bedeutet, daß zunächst mit sehr kleinem Stromflußwinkel bestromt und der Stromflußwinkel vergrößert wird.
Damit die Zündpulse von der Phasenanschnittsteuerung 6 an den Ausgang 16 des UND-Gatters 13 gelangen, stehen an den anderen beiden Eingängen 17 und 18 des UND-Gatters Freigabesignale an, wobei der Eingang 17 mit der Ablaufsteuerung und der Eingang 18 mit der Wirkstrom-Meßauswerteeinrichtung 10 verbunden sind.

Die von der Phasenanschnittsteuerung 6 kommenden Zündpulse liegen außer an dem Eingang 19 des UND-Gatters 13 auch am Eingang eines Mono-Flops 20 an, welches im wesentlichen das schon in Fig. 1 beschriebene Zeitglied 9 bildet. Durch dieses Mono-Flop 20 ist die Meßzeit für den Wirkstrom vorgegeben. Sie kann beispielsweise 0,2 Millisekunden betragen. Mit jedem Zündimpuls wird das Mono-Flop 20 gesetzt und sein Ausgangssignal gelangt dann über ein ODER-Gatter 21 an die Meßfreigabeeinrichtung 8, die im wesentlichen durch einen elektronischen Schalter 22 gebildet ist. Die Meßfreigabeeinrichtung 8 befindet sich zwischen der Strommeßeinrichtung 4 und der Wirkstrom-Meßauswerteeinrichtung 10.
Während des durch das Mono-Flop 20 in seiner Länge bestimmten und durch die Zündpulse gestarteten Wirkstromzeitfensters ist der elektronische Schalter 22 geschlossen und leitet den im Laststromkreis gemessenen Strommeßwert von der Strommeßeinrichtung 4 zur Wirkstrom-Meßauswerteeinrichtung 10 weiter.
Die Wirkstrom-Meßauswerteeinrichtung 10 beinhaltet im wesentlichen einen Komparator 23 sowie ein Flip-Flop 24.
Bei dem Komparator 23 wird der Strommeßwert mit einem voreingestellten Wirkstromgrenzwert verglichen. Liegt der gemessene Strom unterhalb des Grenzwertes, so bleibt das am Ausgang des Flip-Flops 24 anstehende Freigabesignal erhalten. Wird jedoch der Wirkstromgrenzwert überschritten, so wird das Flip-Flop 24 vom Komparator 23 gesetzt, so daß dann am Ausgang kein Freigabesignal mehr ansteht. Das UND-Gatter 13 sperrt die Zündpulse und der Einschaltvorgang wird wegen Überschreiten des Wirkstromgrenzwertes abgebrochen.
Ergibt sich beim Lastvorprüfen mit reduzierter Effektivspannung durch die angeschnittenen Spannungshalbwellen keine Überlast im Laststromkreis, so wird von der Ablaufsteuerung 7 nach einer vorgebbaren Zeit voll eingeschaltet. Dieses Steuersignal gelangt von der Ablaufsteuerung 7 über ein ODER-Gatter 25 zu der Phasenanschnittsteuerung 6.
Während der Lastvorprüfung kann der Komparator 23 auf einen Wirkstromgrenzwert eingestellt sein, der größer ist als der Spitzenwert des Nennstromes bei voller Spannungsbeaufschlagung, das heißt bei nicht angeschnittenen Spannungshalbwellen.
Die Vorrichtung kann dann während des voll eingeschalteten Betriebes auch als "flinke" Sicherung dienen. Dazu wird das von dem ODER-Gatter 25 kommende Steuersignal "voll ein" über das ODER-Gatter 21 an den elektronischen Schalter 22 der Meßfreigabeeinrichtung 8 gegeben. Somit erfolgt während des Betriebes laufend eine Strommessung, wobei wie bei der Lastvorprüfung ein Sperren der Zündpulse bei dem UND-Gatter 13 erfolgt, wenn während des Betriebes ein die Auslöseschwelle überschreitender Überstrom auftritt.

Um die Lastvorprüfung vor dem vollen Einschalten mit möglichst kleinem Strom durchführen zu können, kann der Wirkstromgrenzwert auch kleiner als der im Vollbetrieb auftretende Nennstromspitzenwert vorgesehen sein. In diesem Falle muß jedoch der Anschnittwinkel der zur Lastvorprüfung vorgesehenen Spannungshalbwellen größer als 90° sein, so daß ein Stromflußwinkel <90° vorhanden ist, wobei mit zunehmendem, maximal zugelassenem Zündwinkel die Auslöseschwelle für den Wirkstromgrenzwert verringert werden kann.
Um nach dem Volleinschalten dann ein Auslösen der "flinken" Sicherung zu vermeiden, muß mit dem Volleinschalten die Ansprechschwelle des Wirkstromgrenzwertes bei dem Komparator 23 entsprechend hoch gesetzt werden.
Im Ausführungsbeispiel ist dazu bei dem Grenzwert-Spannungsteiler des Komparators 23 ein zuschaltbarer Widerstand 26 vorgesehen, der über einen elektronischen Schalter 27 zugeschaltet werden kann. Dieser elektronische Schalter 27 ist an den Ausgang des ODER-Gatters 25 angeschlossen, so daß er mit dem "Voll ein"-Signal durchschaltet und die Ansprechschwelle des Komparators 23 angehoben wird.
Dadurch besteht die Möglichkeit, mit sehr kleinen Prüfströmen während der Lastvorprüfung zu arbeiten. Dadurch wird das Versorgungs-Wechselstromnetz auch beim Einschalten einer Überlast bzw. auch eines Kurzschlusses praktisch nicht ins Gewicht fallend belastet. Dies ist insbesondere bei "weichen" Netzen oder Inselnetzen von besonderer Bedeutung.

In Figur 3 ist noch ein Netzteil 28 zur Stromversorgung der elektronischen Baugruppen und in dem den Wechselstromschalter 3 darstellenden Funktionsblock noch ein Zündtreiber 29 zur potential-getrennten Ansteuerung der Thyristoren 15 erkennbar.

Während des Normalbetriebes bildet die Sicherungs-Vorrichtung 1 eine schnelle Sicherung, die bei Überschreitung eines vorgebbaren Wirkstrom-Grenzwertes schnell anspricht. Der zum Auslösen der schnellen Sicherung führende Grenzwert kann ein Mehrfaches des Nennstromes betragen, um zu vermeiden, daß bei sehr kurzen, hohen Stromspitzen ein Auslösen erfolgt.

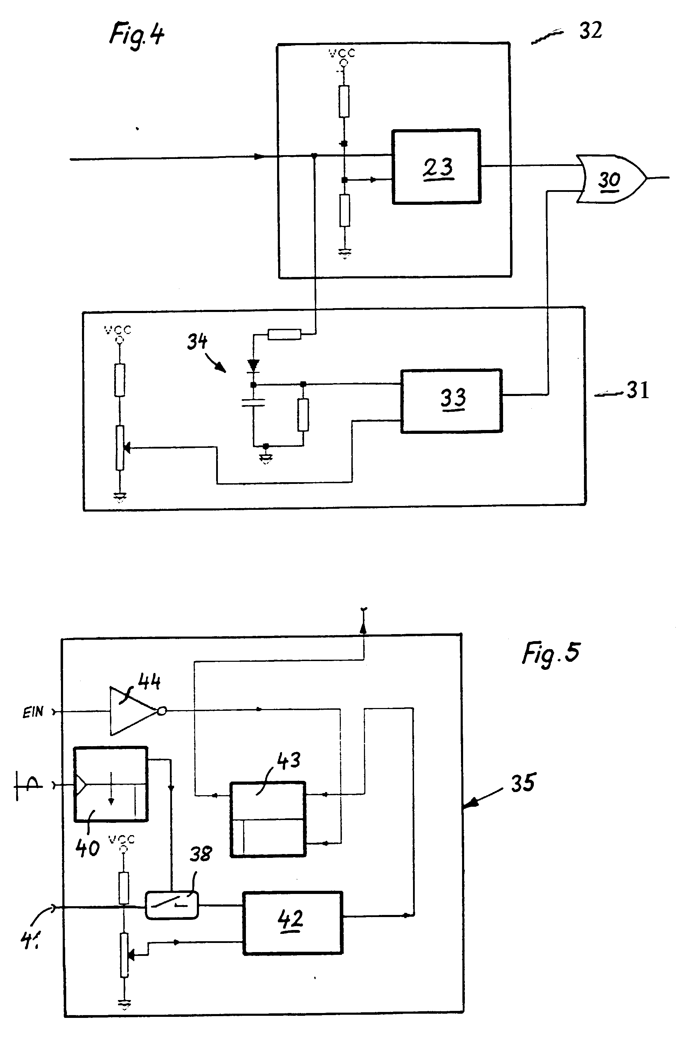

Figur 4 zeigt eine Kombination einer flinken Sicherung und einer trägen Sicherung. Die beiden Sicherungszweige sind hier parallel geschaltet und ihre Ausgänge sind auf ein ODER-Gatter 30 geführt. Dessen Ausgang ist an das in Fig. 3 gezeigte Flip-Flop 24 angeschlossen. Auch die träge Sicherung 31 weist wie die flinke Sicherung 32 einen Komparator 33 mit einem Eingang für einen Stromgrenzwert und einem Eingang für den Stromistwert auf.
An den Strom-Istwerteingang ist eine Verzögerungsschaltung 34, bestehend aus zwei Widerständen , einer Diode und einem Kondensator geschaltet. Der Stromistwert gelangt somit verzögert an den Strom-Istwerteingang des Komparators 33.
Die Ansprechschwelle für die flinke Sicherung 32 ist höher als die der trägen Sicherung, wobei die Strom-Ansprechschwelle der flinken Sicherung etwa dem zehnfachen Nennstrom und die Ansprechschwelle der trägen Sicherung etwa dem zweifachen Nennstrom entsprechen kann.

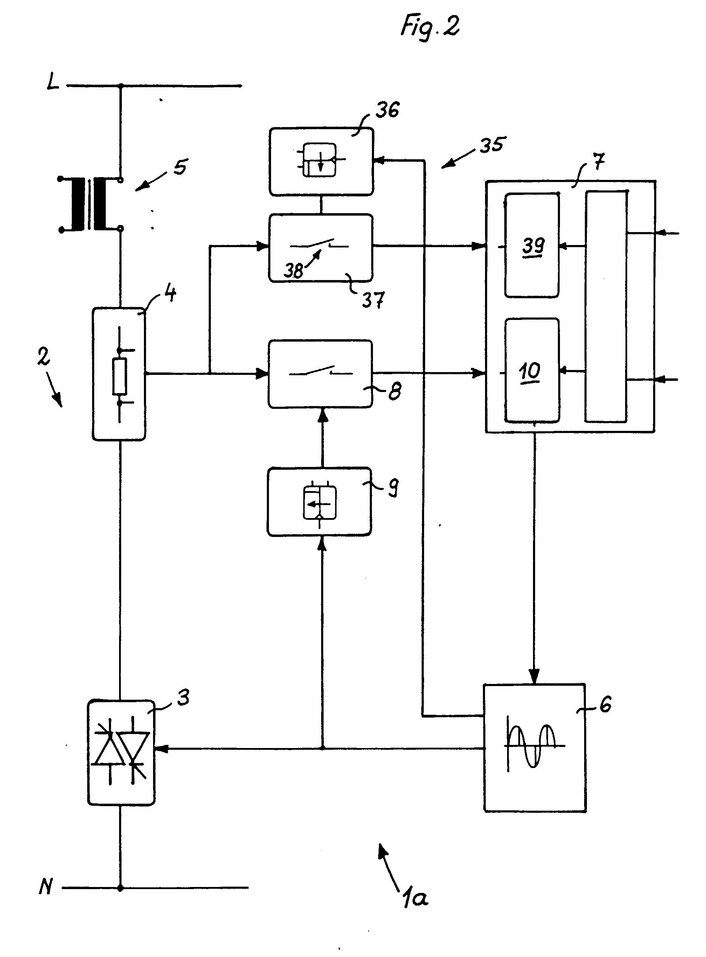

Figur 2 zeigt ein gegenüber Fig. 1 um eine Blindstrommeßeinrichtung 35 erweitertes Blockschaltbild. Mit dieser Vorrichtung 1a ist es möglich, Wirkstrom und Blindstrom getrennt voneinander zu messen.
Die Blindstrommeßeinrichtung 35 weist ein von der Phasenanschnittsteuerung 6 angesteuertes Zeitglied 36 auf, das mit einer Meßfreigabeeinrichtung 37 in Form eines elektronisch ansteuerbaren Schalters 38 verbunden ist. Die Meßfreigabeeinrichtung 37 ist ebenso wie die Meßfreigabeeinrichtung 8 an die Strommeßeinrichtung 4 angeschlossen. Andererseits ist sie mit einer innerhalb der Ablaufsteuerung 7 befindlichen Blindstrom-Meßauswerteeinrichtung 39 verbunden.
Das Zeitglied 36 wird bei jedem Nulldurchgang, beispielsweise einem positiven Flankenanstieg gestartet und schließt ab diesem Zeitpunkt die Meßfreigabeeinrichtung 37. Die Meßzeit kann beispielsweise 0,2 Millisekunden betragen. Da die Messung ab dem Nulldurchgang der Spannung erfolgt, wird in diesem Meßfenster der Blindstrom gemessen.

Durch diese Blindstrommessung besteht bei einer im Laststromkreis befindlichen, induktivitätsbehafteten und mit einem magnetisierbaren Kern versehenen Last die Möglichkeit, dessen Magnetisierung in einen definierten Ausgangszustand zu bringen. Außerdem kann, ausgehend von diesem definierten Magnetisierungszustand praktisch ohne Einschaltstromstoß die induktivitätsbehaftete Last ans Netz geschaltet werden.
Mit in ihrem Effektivwert steigenden Spannungshalbwellenanschnitten nimmt der Blindstrom entsprechend zu und bei Erreichen der magnetischen Sättigung der induktivitätsbehafteten Last nimmt der Blindstrom stark zu. Das Erreichen dieser Blindstromschwelle kann mit der Blindstrommeßeinrichtung 35 erfaßt werden. Ab diesem Zeitpunkt, wo ein vorgebbarer Blindstromgrenzwert überschritten wird, kann mit einer zu der beim Auftreten des Blindstromgrenzwertes anliegenden Spannung gegenpoligen und in ihrem Effektivwert größeren Spannung, beispielsweise auch der vollen Netzspannung eingeschaltet werden, ohne daß dann dabei ein hoher Einschaltstromstoß auftritt.

Durch die getrennte Meßmöglichkeit von Wirkstrom einerseits und Blindstrom andererseits ist eine Vorrichtung 1a geschaffen, mit der die Last während des Einschaltvorganges auf Überlast oder Kurzschluß überprüft werden kann und andererseits ist gleichzeitig bei einer induktivitätsbehafteten Last ein Magnetisieren in eine definierte Ausgangslage und - falls keine Überlast vorliegt - ein Sanfteinschalten, das heißt ein Einschalten ohne großen Einschaltstromstoß möglich.
Durch die getrennte Messung von Wirkstrom und Blindstrom wird sicher vermieden, daß bei einer Überlast eingeschaltet wird. Dies war bisher bei einer nichtselektiven Strommessung möglich, da bei Überschreiten eines Stromgrenzwertes davon ausgegangen wurde, daß sich die Magnetisierung der induktivitätsbehafteten Last in einer definierten Sättigungsendlage befindet und nun "sanft" eingeschaltet werden könne. Das Überschreiten des Stromgrenzwertes konnte aber in diesem Falle auch von einem hohen Wirkstrom infolge einer Überlast (Kurzschluß) herrühren, so daß dann beim vollen Einschalten ans Netz ein Sicherungselement ausgelöst wurde, wobei aber sehr hohe Stromspitzen auftreten können.

Figur 5 zeigt die Blindstrommeßeinrichtung 35 in etwas detaillierter Form. Sie weist als Zeitglied 36 (vergleiche Fig.2) ein Mono-Flop 40 auf, an dessen Eingang im Ausführungsbeispiel die positiven Spannungshalbwellen geschaltet sind. Dieses Mono-Flop 40 gibt an den die Meßfreigabeeinrichtung 37 (Fig.2) bildenden elektronischen Schalter 38 von dem Nulldurchgang zur positiven Spannungshalbwelle ein Steuersignal , so daß der am Eingang 41 anstehende Strom-Istwert an den Istwerteingang eines Komparators 42 durchgeschaltet wird. Am zweiten Eingang des Komparators 42 steht eine Referenzspannung aus einem Spannungsteiler zur Festlegung des Blindstrom-Grenzwertes an. Wird dieser Blindstrom-Grenzwert überschritten, so gelangt vom Komparator 42 ein Steuersignal an ein nachgeschaltetes Flip-Flop 43, welches dadurch gesetzt wird und ein entsprechendes Ausgangssignal an das in Fig. 3 gezeigte ODER-Gatter 25 liefert. Dieses Steuersignal führt dann zum vollen Einschalten der Last ans Netz.
Mit 44 ist noch ein Rücksetzinverter bezeichnet, der zum Rücksetzen des Flip-Flops 43 vor dem Einschalten dient.

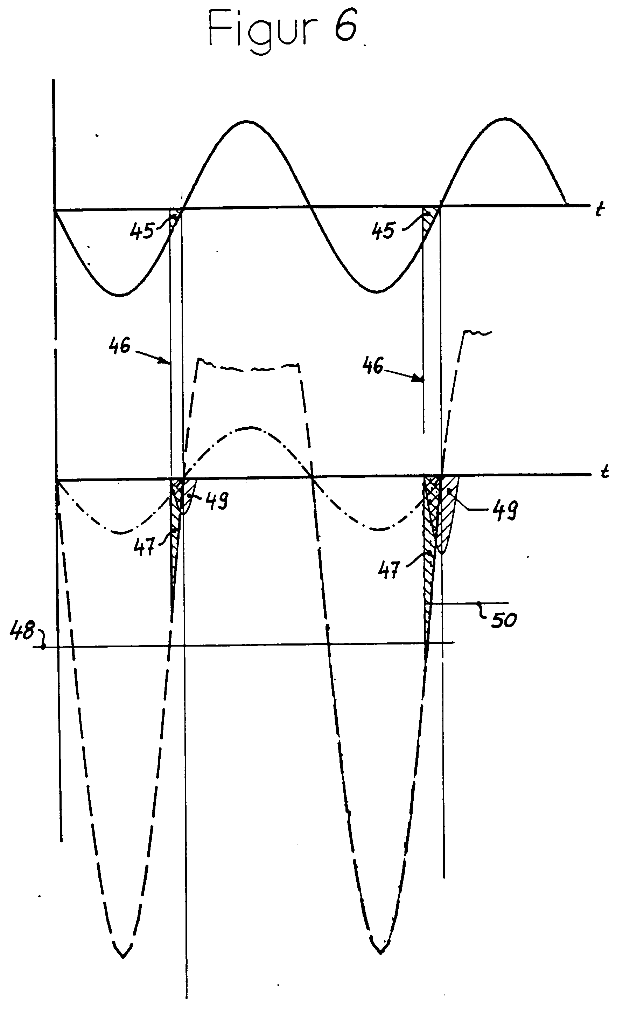

Figur 6 zeigt in einer ersten Diagrammzeile die Spannungskurven und in einer zweiten Diagrammzeile die Stromkurven an einem sekundär kurzgeschlossenen Transformator als Last 5. Im vorliegenden Falle werden jeweils nur bei den negativen Netzspannungshalbwellen kleine Spannungsanschnitte 45 erzeugt, die mit der Zeit zunehmen. Jeweils mit dem Zündzeitpunkt 46, wo die jeweiligen Spannungsanschnitte 45 beginnen, beginnt auch ein Wirkstrom 47 zu fließen, der in der unteren Diagrammzeile erkennbar ist. Die Höhe des Wirkstromes hängt von dem Effektivwert des jeweiligen Spannungsanschnittes 45 sowie der Last ab. Entsprechend den sich vergrößernden Spannungsanschnitten 45 werden auch die Wirkstrom-Amplituden größer.
Im unteren Stromkurven-Diagramm ist parallel zur Zeitachse eine Auslöseschwelle für einen vorgegebenen Wirkstromgrenzwert 48 eingezeichnet. Es ist hier erkennbar, daß mit dem ersten Wirkstromimpuls 47 diese Auslöseschwelle noch nicht erreicht wird. Erst beim zweiten Wirkstromimpuls wird diese Auslöseschwelle erreicht.
Wie anhand der Figuren 1 und 3 beschrieben, wird bei Überschreiten des vorgegebenen Wirkstromgrenzwertes 48 der Einschaltvorgang abgebrochen.

In dem Stromkurvendiagramm ist strichliniert der Stromverlauf eingezeichnet, der sich bei direktem Einschalten des sekundär kurzgeschlossenen Transformators als Last ans Netz einstellen wurde. Im Vergleich zu dem in der zweiten negativen Halbwelle auftretenden Auslöse-Wirkstromgrenzwert ist deutlich erkennbar, daß durch das erfindungsgemäße Verfahren nur kleine Effektiv-Ströme selbst bei kurzgeschlossenen Lasten auftreten können.
Zur Verdeutlichung ist strichpunktiert der sich bei Nennlast einstellende Stromverlauf dargestellt.

Da es sich bei dem hier im Beispiel vorgesehenen Transformator um eine induktivitätsbehaftete Last handelt, baut sich ab dem Zündzeitpunkt 46 auch ein Blindstrom 49 auf, dessen Maximum im Spannungsnulldurchgang liegt.
Durch die zeitlich nacheinander angeordneten Meß-Zeitfenster einerseits für den Wirkstrom und andererseits für den Blindstrom, können diese beiden Ströme selektiv voneinander getrennt gemessen werden. Das Zeitfenster zum Messen des Wirkstromes beginnt dabei mit dem jeweiligen Zündzeitpunkt 46 und ist in seiner zeitlichen Breite so kurz wie möglich bemessen, wobei für eine sichere Messung beispielsweise 0,2 Millisekunden oder weniger ausreichen.
Das Zeitfenster zur Messung des Blindstromes beginnt mit dem Nulldurchgang und ist ebenfalls in seiner zeitlichen Breite so vorgesehen, daß eine sichere Messung durchführbar ist. Auch hier genügen beispielsweise 0,2 Millisekunden oder weniger.
Durch diese vergleichsweisen schmalen Zeitfenster werden gegenseitige Beeinflussungen der Meßgrößen sicher verhindert, weil dadurch ein vergleichsweise großer Abstand zwischen den beiden Zeitfenstern vorhanden ist.

Die vom Wirkstrom zeitlich getrennte Messung des Blindstromes wird für einen "sanften" Einschaltvorgang verwendet. Da die Magnetisierungs- oder Remanenzlage vor dem Einschalten der induktivitätsbehafteten Last nicht bekannt ist, könnte sich beim direkten Einschalten ans Netz ein hoher Einschalt-Blindstromstoß einstellen, der zum Auslösen einer Schmelzsicherung oder dergleichen führen könnte. Um dies zu vermeiden, wird die induktivitätsbehaftete Last durch die in ihrem Effektivwert allmählich zunehmenden, kleinen Spannungsanschnitte 45 bzw. den daraus resultierenden Strom in eine definierte Magnetisierungs-Ausgangslage geführt. Ist diese Lage erreicht, macht sich dies durch einen dann stark zunehmenden Blindstrom bemerkbar. Dies kann mit Hilfe der Schaltung nach Fig. 2 bzw. Fig. 5 erkannt werden und es wird ab diesem Zeitpunkt mit einer gegenpoligen Spannung beispielsweise voll eingeschaltet.
In Figur 6 ist die hier vorgesehene Ansprechschwelle für den Blindstromgrenzwert 50 in dem unteren Stromkurvendiagramm eingezeichnet. In diesem Diagramm wird der Blindstromgrenzwert 50 nicht erreicht, da in diesem Ausführungsbeispiel der Einschaltvorgang wegen Überschreiten des Wirkstromgrenzwertes (angenommener Fall eines sekundärseitigen Kurzschlusses am Transformator) abgebrochen wurde. Wäre dies nicht der Fall gewesen, so hätte in einer der nächsten negativen Halbwellen der Blindstrom den vorgegebenen Blindstromgrenzwert 50 überschritten, was als Auslösezeitpunkt für ein phasenrichtiges Einschalten der Last an die Netzspannung verwendet werden würde.

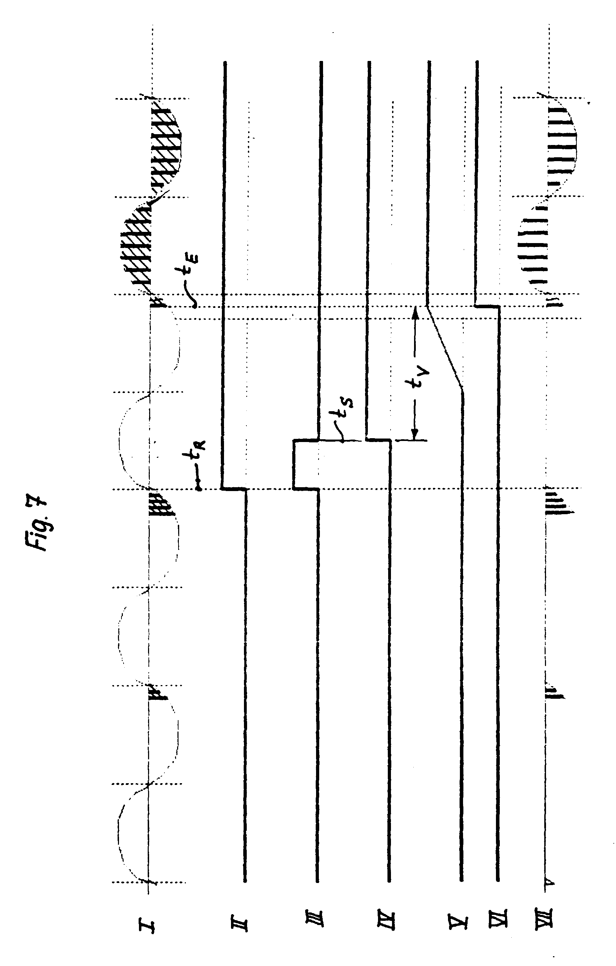

Die Figuren 7 bis 9 zeigen noch Maßnahmen, die dazu beitragen, daß die erfindungsgemäße Vorrichtung 1 bzw. la als kompaktes "Vorschaltgerät" gebaut werden kann. Durch die insbesondere zum Beispiel gemäß Figur 1 vorgesehene Maßnahme können nämlich auf hohe Überlastströme dimensionierte und dementsprechend auch voluminöse Sicherungselemente eingespart werden.
Auch die Maßnahmen gemäß Figur 2 bzw. Figur 5 zum "Sanfteinschalten" vermeiden hohe Einschaltspitzenströme, was ebenfalls eine wesentlich kleinere Baugröße der Funktionselemente zuläßt.

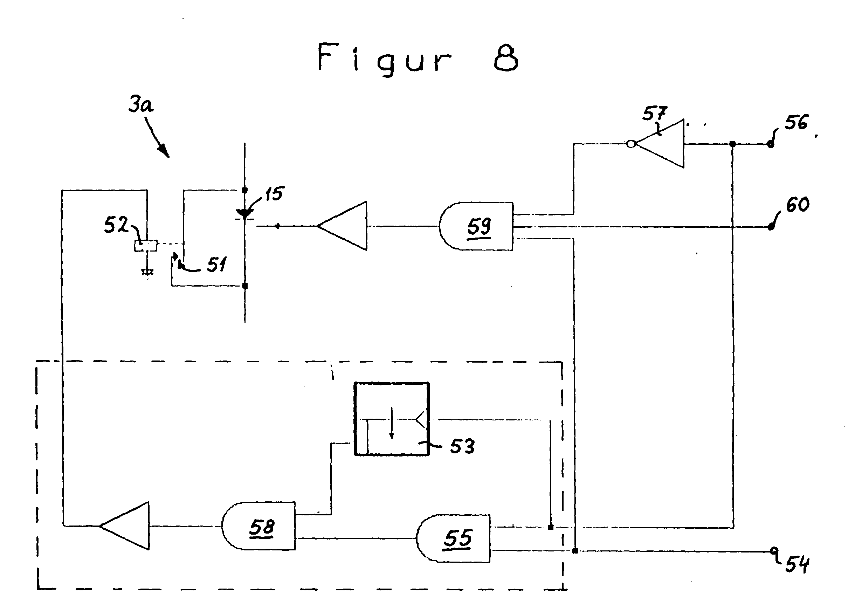

Bei geringer Baugröße ist die am Stellglied 3 auftretende Wärmeentwicklung problematisch. Um diese Problematik zu vermeiden, ist bei dem in Figur 8 gezeigten Stellglied 3a eine Parallelschaltung eines Thyristors 15 mit einem mechanischen Kontakt 51 eines Relais 52 vorgesehen.
Der Thyristor 15 dient hier zur Spannungsbeaufschlagung der Last mit den im Effektivwert sehr kleinen Spannungsanschnitten 45 (vergleiche Figur 6). Dementsprechend kann dieser Thyristor auch auf sehr kleine Ströme dimensioniert sein, so daß man mit kleiner Baugröße auskommt. Auch die Wärmeentwicklung ist wegen des nur kurzzeitigen Betriebes während der Startphase vernachlässigbar. Zum vollen Einschalten wird dann der Relaiskontakt 51 geschlossen. Damit dies exakt zum vorgesehenen Zeitpunkt erfolgt, um Einschaltstromstösse zu vermeiden, erfolgt die Zuschaltung des Relaiskontaktes 51 unter Berücksichtigung der Relaisansprechverzögerungszeit.
Um den exakten Einschaltzeitpunkt genau zu treffen, ist ein Zeitglied in Form eines Mono-Flops 53 vorgesehen, dessen Verzögerungszeit so bemessen ist, daß sie zusammen mit der Relaisanzugsverzögerung, gemessen vom Signal zum vollen Einschalten, den vorgesehenen Zeitpunkt des Kontaktschließens des Kontaktes 51 ergibt.
Fig. 7 zeigt in einem Diagramm die Wirkungsweise der in Figur 8 gezeigten Schaltung.
In der ersten Diagrammzeile ist die Netzwechselspannung mit jeweils zunehmenden, hier zur Verdeutlichung schraffierten Spannungsanschnitten 45 bzw. vollen Spannungshalbwellen dargestellt, wie sie an die Last geschaltet werden.
Mit t_{E} ist der Zeitpunkt gekennzeichnet, zu dem die Last voll ans Netz geschaltet werden soll. Der Zeitpunkt t_{R} ist der Zeitpunkt, zu dem die zum Beispiel in Figur 5 gezeigte Blindstrommeßeinrichtung 35 ein Steuersignal ausgibt, daß ein vorgesehener Magnetisierungszustand der induktivitätsbehafteten Last erreicht ist.
Dieses Steuersignal gelangt auch auf den Eingang 56, der mit einem Inverter 57, einem UND-Gatter 55 sowie dem Mono-Flop 53 verbunden ist. Das UND-Gatter 55 ist außerdem noch mit einem Eingang 54 verbunden, an dem ein Steuersignal ansteht, wenn in der Lastvorprüfphase kein Überstrom festgestellt wurde.
Der Ausgang des UND-Gatters 55 ist mit einem weiteren UND-Gatter 58 verbunden, dessen weiterer Eingang mit dem Ausgang des Mono-Flops 53 verbunden ist.
Zum Zeitpunkt t_{R} beginnt das Mono-Flop 53 zu laufen. Ist die Verzögerungszeit abgelaufen, so schaltet das nachfolgende UND-Gatter 58 durch und das Relais 52 wird bestromt. Dieser Zeitpunkt t_{S} ist in der vierten Diagrammzeile von Figur 7 gezeigt.
Bedingt durch die Anzugsverzögerung - die Diagrammzeile 5 zeigt den Relais-Anker-Weg - erfolgt die tatsächliche Kontaktgabe verzögert zum Bestromungszeitpunkt des Relais zum Zeitpunkt t_{E} gemäß Diagrammzeile 6.
Die Anzugsverzögerungszeit t_{V} des Relais 52 zusammen mit der Verzögerungszeit des Mono-Flops 53 ergibt den gewünschten Zeitabstand zwischen den Zeitpunkten t_{S} und t_{E}.
In der untersten Diagrammzeile 7 ist noch der durch die Last, beispielsweise einen Transformator fließende Strom bei sekundärer Belastung dargestellt.

Über den Inverter 57 und ein UND-Gatter 59 mit drei Eingängen werden die am Eingang 60 ankommenden Zündpulse für den Thyristor 15 nur dann durchgelassen, wenn die Spannungsanschnitte 45 erzeugt werden sollen.

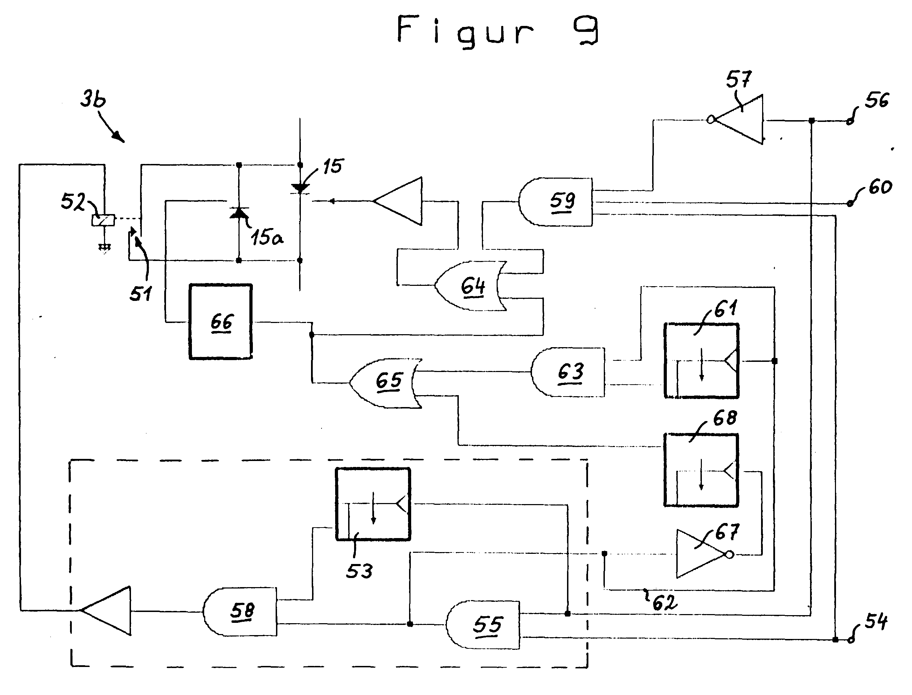

Figur 9 zeigt eine weitere Variante eines Stellgliedes 3b, bei dem zwei antiparallel geschaltete Thyristoren 15, 15a sowie ein parallel dazu geschalteter Kontakt 51 des Relais 52 vorgesehen ist.
Wie auch schon in Figur 8 dient der Thyristor 15 zum Erzeugen von Spannungsanschnitten 45 vor dem eigentlichen, vollen Einschalten der Last ans Netz. Zusätzlich ist hier noch vorgesehen, daß der Relais-Kontakt 51 beim Schließen und Öffnen jeweils durch die leitend geschalteten Thyristoren 15, 15a überbrückt ist.

Der in Figur 8 strichliniert umgrenzte Funktionsblock ist in gleicher Weise auch in dem Ausführungsbeispiel gemäß Fig. 9 enthalten. Außerdem sind auch hier der Inverter 57 und das UND-Gatter 59 vorhanden.
Zum Einschalten der mit dem Stellglied 3a in Reihe geschalteten Last wird gleichzeitig mit dem Mono-Flop 53 ein Mono-Flop 61 gestartet, was über die hinter dem UND-Gatter 55 angeschlossene Steuerleitung 62 erfolgt. Die Verzögerungszeit des Mono-Flops 61 ist so eingestellt, daß sie etwas kürzer ist als die Summe der Verzögerungszeiten des Mono-Flops 53 und der Relaisanzugsverzögerungszeit. Mit Ablauf des Mono-Flops 61 werden die beiden Thyristoren 15, 15a gezündet. Dies erfolgt über das UND-Gatter 63 sowie die beiden ODER-Gatter 64 und 65. Zur Potentialtrennung ist in die Ansteuerleitung des Thyristors 15a noch ein Optokoppler 66 geschaltet.

Beim Ausschalten der Last wird über einen Inverter 67 ein Mono-Flop 68 gestartet, dessen Laufzeit etwas länger als die Relaisabfallzeit ist. Während der Laufzeit des Mono-Flops 68 sind beide Thyristoren 15, 15a gezündet. Wenn dann das Relais 62 abgefallen und der Kontakt 51 geöffnet ist, schalten die beiden Thyristoren 15, 15a im Nulldurchgang des Laststromes "weich" aus, ohne daß dabei ein Lichtbogen am Relaiskontakt entstehen kann.
Da die Thyristoren nur für sehr kurze Zeit den Laststrom übernehmen müssen, können sie entsprechend klein dimensioniert werden. Auch ist wegen der kurzen Betriebszeit keine Kühlung erforderlich, so daß sie gut auch unter beengten Verhältnissen unterzubringen sind. Auch das Relais 52 bzw. dessen Kontakt 51 kann durch die den Kontakt schützenden Thyristoren entsprechend kleiner dimensioniert sein.

Bei dieser Ausführungsform kann der genaue Einschaltzeitpunkt auch von den Thyristoren 15, 15a übernommen werden, so daß sich hier Toleranzen bei der Relais-Anzugsverzögerungszeit nicht nachteilig auswirken.

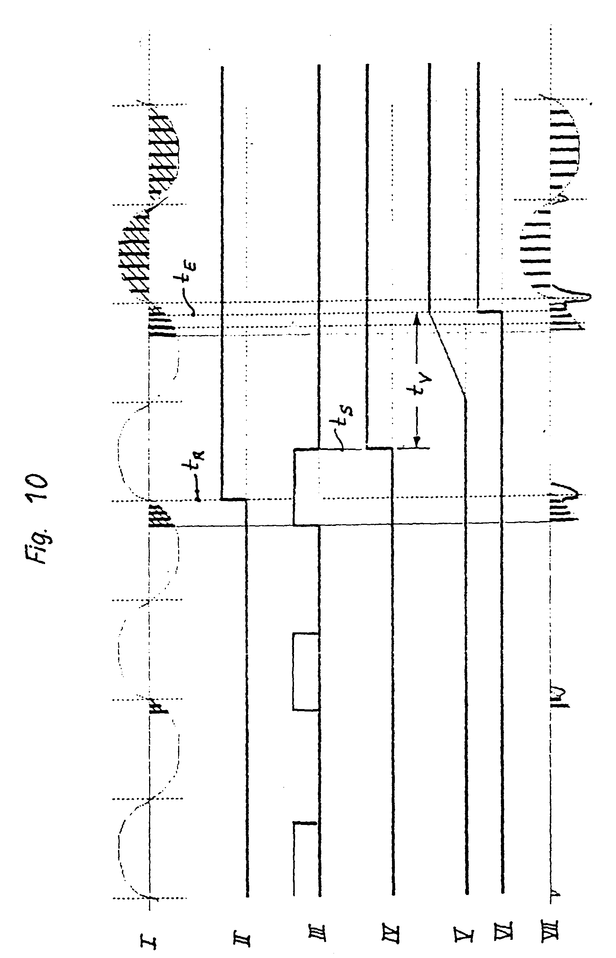

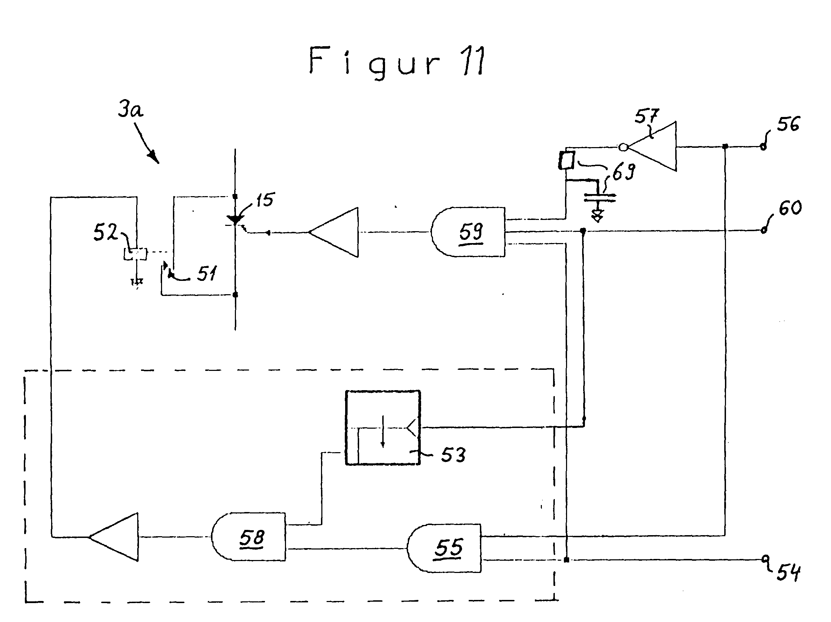

Eine weitere Verbesserung nach den Figuren 10 und 11 besteht darin, die Schaltung auch bei größeren Netzspannungsschwankungen noch betriebssicherer zu gestalten. Insgesamt würde nämlich das Relais bei Überspannung zu früh anziehen bzw. bei Unterspannung zu spät anziehen. Dies hätte durch diese dann nicht passenden Einschaltzeitpunkte entsprechend große Blindstromspitzen zur Folge.

Wie in den Figuren 7 und 8 erkennbar, wurden gemäß Diagrammzeile I durch den Thyristor 15 zunehmend größere Spannungsabschnitte auf die Last geschaltet. Beim Auftreten eines Blindstromschwellwertes wurde gemäß Zeile III ein Mono gestartet, dessen Verzögerungszeit auf die Anzugszeit des Relais abgestimmt ist. Diese Verzögerungszeit zusammen mit der Relaisanzugszeit t_{V} ergibt dann ab dem Einschaltmoment t_{R} den Zeitpunkt des Kontaktschließens des Relais t_{E}.

Um einen Kontaktabbrand am Relais zumindest zu reduzieren und um auch bei Netzspannungsschwankungen das Zuschalten des Relaiskontaktes innerhalb eines "geschützten" Zeitbereiches vorzunehmen, wird nun vorgeschlagen, daß der Thyristor in der Zuschaltphase des Relais noch einmal gezündet wird. Der vom Thyristor abgedeckte Zündbereich soll dabei gleich groß oder etwas größer sein als der Toleranzbereich des Relaiskontaktes. Dadurch liegen auch Prellungen innerhalb dieser geschützten Zone. Die Einschaltzeit des Thyristors könnte gleich groß sein wie das letzte vor einer Periode liegende Signal, da aber von der Schaltung zunehmend größer werdende Spannungsabschnitte vorgegeben werden, wird auch hier davon Gebrauch gemacht, daß dieser Spannungsabschnitt vor dem tatsächlichen Zuschalten etwas größer ist als der davorliegende Spannungsabschnitt. In der Schaltung gemäß Figur 11 sind die erforderlichen Maßnahmen erkennbar, damit der Thyristor 15 vor dem Zuschalten des Relais noch einmal gezündet werden kann. Bei einem Ein-Signal an 56 wird dieses Signal durch das RC-Glied 69 invertiert und dann mindestens für eine Periodenlänge verzögert, so daß das UND-Gatter 59 auch noch nach einer Periodenlänge nach dem bisher letzten vom Thyristor 15 geschalteten Spannungsabschnitt offengehalten wird. Somit kann noch einmal ein Zündimpuls durchkommen und den Thyristor 15 zünden. Die Zündsignale kommen beim Eingang 60 an.

In Figur 10 ist erkennbar, daß gemäß Zeile III das Monoflop 53 nicht wie in Figur 7 nur beim Überschreiten einer vorgegebenen Blindstromschwelle startet, sondern jedes Mal mit dem Zündimpuls für einen Spannungsabschnitt angesteuert wird. Da die Spannungszeitfläche der Spannungsabschnitte gemäß Zeile I ausschlaggebend ist für den Blindstromimpuls, ändert sich bei Spannungsschwankungen dementsprechend auch die Zeitdauer des Spannungsabschnittes, indem letztendlich dann ein Überschreiten der Blindstromschwelle auftritt. Bei höheren Netzspannungen würde dementsprechend der Zeitpunkt später liegen und bei geringeren Netzspannungen früher, um jeweils die gleiche Spannungszeitfläche auf die Last zu schalten. Da das Mono 53 jedes Mal mit dem Zünden des Thyristors vom Zündsignal 60 gestartet wird, s. Figur 11, verschiebt sich auch die Monozeit entsprechend. Da die abfallende Flanke des Monos das Bestromen des Relais auslöst, wenn die Blindstromschwelle überschritten wurde, verschiebt sich somit auch dieser Zeitpunkt entsprechend den unterschiedlichen Netzspannungen. Dadurch ist automatisch eine Anpassung an Netzspannungsschwankungen für das Relais gegeben, so daß auch in diesen unterschiedlichen Betriebsfällen sichergestellt ist, daß das Relais innerhalb der vorgesehenen Toleranzzone kontaktiert.

Das Mono 53 schaltet zwar jedes Mal beim Zündimpuls des Thyristors, jedoch wirkt sich dessen abfallende Flanke erst dann für die Bestromung des Relais aus, wenn vor der abfallenden Flanke des Monos auch der Blindstromschwellwert überschritten worden ist. In Figur 10 liegt dies zwar innerhalb des Monoimpulses, dies muß aber nicht so sein. Beispielsweise ist dies bei Relais der Fall, die eine sehr lange Anzugszeit haben, so daß dementsprechend der Monoimpuls sehr kurz ist. In diesem Falle wäre das Mono bereits abgefallen, bevor der Blindstromschwellwert auftrat.

Bei unterschiedlichen Transformatoren treten die Blindstromimpulse zu unterschiedlichen Zeitpunkten bezüglich des Netzspannungsnulldurchganges auf. Beispielsweise treten bei Ringkerntransformatoren die Blindstromspitzen vor dem Nulldurchgang und bei Normaltransformatoren etwa im Nulldurchgang auf. Dies führte bisher zu unterschiedlichen Kontaktschlußzeitpunkten. Da nun aber mit Beginn des Thyristorzündens das Mono gestartet wird, spielt der Zeitpunkt des tatsächlichen Auftretens des Blindstromschwellwertes für den Bestromungszeitpunkt des Relais keine Rolle mehr.

## Patentansprüche

1. Verfahren zum Absichern eines Wechselstromkreises (2), wobei der Spannungseffektivwert im Laststromkreis, insbesondere durch Vergrößern des Stromflußwinkels, nach dem Einschalten allmählich gesteigert wird und wobei bei Überschreitung eines vorgebbaren Laststromes der Laststromkreis unterbrochen wird, **dadurch gekennzeichnet**, daß nach dem Einschalten zum Lastvorprüfen jeweils mit Beginn einer reduzierten Spannungsbeaufschlagung der Wirkstrom innerhalb eines vorgebbaren, vor dem nachfolgenden Nulldurchgang der Wechselspannung endenden Zeitfensters gemessen und bei Überschreitung eines vorgebbaren Wirkstromgrenzwertes der Einschaltvorgang abgebrochen wird.

2. Verfahren nach Anspruch 1, wobei sich im Laststromkreis eine induktivitätsbehaftete und mit einem magnetisierbaren Kern versehene Last (5) befindet, dadurch gekennzeichnet, daß zusätzlich zu dem Wirkstrom der Blindstrom im Bereich des Nulldurchganges der Wechselspannung gemessen wird und daß zur Reduzierung eines gegebenenfalls auftretenden Einschaltblindstromstoßes, bei Überschreiten eines vorgebbaren Blindstromgrenzwertes während des Vergrößerns des Spannungseffektivwertes, die Last nach Auftreten dieses gemessenen Grenzwertes mit einer zu der beim Auftreten des Blindstromgrenzwertes anliegenden Spannung gegenpoligen und in ihrem Effektivwert größeren Spannung beaufschlagt wird.

3. Verfahren nach Anspruch 1 oder 2, dadurch gekennzeichnet, daß nach einer vorgebbaren Lastvorprüfzeit ohne Überschreiten des Wirkstromgrenzwertes, die Last (5) mit voller Spannungsbeaufschlagung ans Wechselstromnetz geschaltet wird und daß dabei gegebenenfalls der Wirkstromgrenzwert erhöht wird.

4. Verfahren nach den Ansprüchen 1 - 3, **dadurch gekennzeichnet**, daß zur Vermeidung der Auswirkungen von Netzspannungsschwankungen auf den Wechselstromschalter der Bestromungszeitpunkt desselben vom Bestromungszeitpunkt der Last abhängig gemacht wird.

5. Vorrichtung zur Absicherung eines Wechselstromkreises, wobei diese Vorrichtung einen im Laststromkreis befindlichen und mit einer Phasenan- oder Abschnittsteuerung verbundenen Wechselstromschalter (3) als Stellglied zum Erzeugen einer reduzierten Spannungsbeaufschlagung sowie eine Ablaufsteuerung (7) zum Verändern, insbesondere Vergrößern, der Effektivspannung an der einzuschaltenden Last aufweist, zur Durchführung des Verfahrens nach Anspruch 1 bis 4, **dadurch gekennzeichnet**, daß die Vorrichtung (1) eine im Laststromkreis befindliche Strommeßeinrichtung (4), eine mit einem Zeitglied (9) zusammenarbeitende Meßfreigabeeinrichtung (8) zur Meßfreigabe mit Beginn einer Spannungsbeaufschlagung der Last (5) über einen vorgebbaren Zeitabschnitt zur selektiven Erfassung des Wirkstromscheitel- oder Spitzenwertes bei der reduzierten Spannungsbeaufschlagung sowie eine Meßauswerteeinrichtung (10) zum Last vorprüfen aufweist.

6. Vorrichtung nach Anspruch 5, **dadurch gekennzeichnet**, daß die Meßauswerteeinrichtung (10) einen Komparator (23) mit einem Eingang für den Stromistwert sowie einen Eingang für einen voreinstellbaren Stromgrenzwert aufweist, und daß der Stromgrenzwert für das Lastvorprüfen einerseits und den Normalbetriebsfall mit voller Spannungsbeaufschlagung der Last andererseits umschaltbar, insbesondere bei voller Spannungsbeaufschlagung, vergrößerbar ist.

7. Vorrichtung nach Anspruch 6, **dadurch gekennzeichnet**, daß für das Umschalten des Stromgrenzwertes am Komparator (23) ein, insbesondere mit der Ablaufsteuerung (7) in Steuerverbindung stehender, elektronischer Schalter (27) vorgesehen ist und daß dieser vorzugsweise an einen Zusatzwiderstand (26) zum Verändern des am Stromgrenzwert-Eingang geschalteten Spannungsteiler angeschlossen ist.

8. Vorrichtung nach einem der Ansprüche 5 bis 7, **dadurch gekennzeichnet,** daß zusätzlich zu der Wirkstrommeßeinrichtung eine Blindstrommeßeinrichtung (35) mit einem von der Phasenan- oder Abschnittsteuerung (6) angesteuerten Zeitglied (36) und einer davon angesteuerten Meßfreigabeeinrichtung (37) zur Meßfreigabe mit Beginn eines Spannungsnulldurchganges über einen vorgebbaren Zeitabschnitt sowie eine Blindstrom-Meßauswerteeinrichtung (39) vorgesehen sind.

9. Vorrichtung nach einem der Ansprüche 5 bis 8, **dadurch gekennzeichnet**, daß das Stellglied (3a) im Laststromkreis aus einer Parallelschaltung eines Thyristors (15) für die im Effektivwert reduzierte Spannungsbeaufschlagung während der Lastüberprüfung und eines elektromagnetischen Schalters (52) besteht und daß eine Steuervorrichtung (53) zum zeitrichtigen Schalten des elektromagnetischen Schalters (52) vorgesehen ist.

10. Vorrichtung nach einem der Ansprüche 5 bis 8, **dadurch gekennzeichnet**, daß das Stellglied (3b) zwei antiparallel geschaltete Thyristoren (15,15a) für die Ein- und Ausschaltvorgänge im Laststromkreis sowie einen nach einem Einschaltvorgang zuschaltbaren bzw. vor einem Ausschaltvorgang abschaltbaren elektromagnetischen Schalter (52) aufweist.

11. Vorrichtung nach Anspruch 9, **dadurch gekennzeichnet**, daß diese unabhängig gemacht wird von Netzschwankungen, indem der Bestromungszeitpunkt (t_{S}) des elektromechanischen Schalters (52) abhängig gemacht wird von dem Bestromungszeitpunkt der Last (5), nachdem diese die Blindstromschwelle erreicht hat.

## Claims

1. Method for safeguarding an a.c. circuit (2), wherein the effective voltage in the load circuit is gradually raised after switching on, in particular by enlarging the angle of the current flow, and wherein the load circuit is cut off when a predetermined load current is exceeded, characterised in that after switching on for a load pre-check respectively at the beginning of exposure to a reduced voltage, the active current is measured within a predetermined time window ending before the subsequent zero crossing of the a.c. voltage, and the switching on process is broken off when a predetermined active current limit is exceeded.

2. Method according to Claim 1, wherein an inductive load (5) with a magnetisable core is present in the load circuit, characterised in that in addition to the active current, the reactive current is measured in the region of the zero crossing of the a.c. voltage; and that in order to reduce a possibly occurring switch-on reactive current surge, upon occurrence of the reactive current exceeding a predetermined threshold value while the effective voltage is being raised, a voltage having a polarity opposite to and a magnitude greater than the voltage causing the reactive current to exceed the threshold value is applied to the load after this measured threshold has occurred.

3. Method according to Claim 1 or 2, characterised in that after a predetermined load pre-check time without the effective current exceeding the threshold value, the load (5) is switched on to the a.c. mains with full voltage application; and that in that case the effective current threshold is optionally increased.

4. Method according to Claims 1-3, characterised in that to prevent mains voltage fluctuations influencing the a.c. switch, the moment when current flows into the switch depends upon the moment when current flows into the load.

5. Apparatus for safeguarding an a.c. circuit, this apparatus having an a.c. switch (3) as a control member for generating a reduced voltage application, located in the load circuit and connected to a phase trigger or section control and a process control (7) for changing, in particular raising, the effective voltage at the load to be switched on, for conducting the method according to Claims 1 to 4, characterised in that the apparatus (1) has a current measurement unit (4) located in the load circuit, a gating unit (8) cooperating with a time delay element (9) for measurement release at the beginning of an application of voltage to the load (5) over a predetermined amount of time for the selective detection of the active current crest or peak value in the case of reduced application of voltage and a measurement evaluation unit (10) for load pre-checking.

6. Apparatus according to Claim 5, characterised in that the measurement evaluation unit (10) has a comparator (23) with an input for the current actual value as well as an input for a preset current value limit; and that the current value limit for the load pre-check on the one hand and the normal operational case with full application of voltage on the load on the other may be switched over, in particular may be enlarged on full application of voltage.

7. Apparatus according to Claim 6, characterised in that an electronic switch (27), in particular with control connection to the process control (7), is provided for switching over the current value limit at the comparator (23); and that this switch is preferably connected to a supplementary resistance (26) for varying the voltage divider switched at the current value limit input.

8. Apparatus according to one of Claims 5 to 7, characterised in that in addition to the active current measurement unit, a reactive current measurement unit (35) having a time element (36) triggered by the phase trigger or section control (6) and having a gating unit (37) triggered by said time element for measurement release at the beginning of a voltage zero crossing over a predetermined amount of time, as well as a reactive current measurement evaluation unit (39) are provided.

9. Apparatus according to one of Claims 5 to 8, characterised in that the switch element (3a) in the load current circuit consists of a parallel connection of a thyristor (15) for the application of voltage with reduced effective value during the load check and of an electromagnetic switch (52); and that a control device (53) is provided for switching the electromagnetic switch (52) at the correct time.

10. Apparatus according to one of Claims 5 to 8, characterised in that the switch element (3b) has two thyristors (15, 15a) switched antiparallel for switching on and off processes in the load current circuit as well as an electromagnetic switch (52) which may be switched on after a switching on process or may be switched off before a switching off process.

11. Apparatus according to Claim 9, characterised in that this is rendered independent from mains fluctuations in that the moment (tₛ) of current flowing into the electromagnetic switch (52) is rendered dependent upon the moment current flows to the load (5) after this has reached the reactive current threshold.

## Revendications

1. Procédé pour protéger un circuit à courant alternatif (2), selon lequel après le branchement on augmente progressivement la valeur efficace de la tension dans le circuit de charge, notamment en augmentant l'angle du flux de courant, et on ouvre le circuit de charge lors du dépassement d'un courant de charge pouvant être prédéterminé, caractérisé en ce qu'après le branchement, pour réaliser un contrôle préalable de la charge respectivement au début d'une charge de tension réduite, on mesure le courant actif à l'intérieur d'une fenêtre temporelle pouvant être prédéterminée, qui se termine avant le passage suivant par zéro de la tension alternative, et on interrompt le processus de branchement lors du dépassement d'une valeur limite pouvant être prédéterminée du courant actif.

2. Procédé selon la revendication 1, selon lequel une charge (5) affectée d'une inductance et pourvue d'un noyau aimantable est située dans le circuit de charge, caractérisé en ce qu'en plus du courant actif, on mesure le courant réactif dans la zone du passage par zéro de la tension alternative et que pour réduire une impulsion de courant réactif de fermeture, qui apparaît éventuellement, lors du dépassement d'une valeur limite pouvant être prédéterminée du courant actif pendant l'augmentation de la valeur efficace de la tension, on applique à la charge, après l'apparition de cette valeur limite mesurée, une tension possédant une polarité opposée à la tension appliquée lors de l'apparition de la valeur limite du courant réactif et dont la valeur efficace est supérieure.

3. Procédé selon la revendication 1 ou 2, caractérisé en ce qu'au bout d'un intervalle pouvant être prédéterminé de contrôle préalable de la charge sans dépassement de la valeur limite du courant actif, on raccorde la charge (5) avec application de la tension totale, au réseau à courant alternatif et qu'on augmente éventuellement la valeur limite du courant actif.

4. Procédé selon les revendications 1-3, caractérisé en ce que pour éviter les effets de fluctuations de la tension du réseau sur l'interrupteur à courant alternatif, on rend l'instant d'alimentation en courant de cet interrupteur, dépendant de l'instant d'alimentation en courant de la charge.

5. Dispositif pour protéger un circuit à courant alternatif, ce dispositif comportant un interrupteur à courant alternatif (3) situé dans le circuit de charge et relié à une unité de commande à découpage de phase, qui sert de circuit de réglage pour obtenir une application réduite de tension, ainsi qu'une unité de commande d'exécution (7) pour modifier, notamment accroître, la tension efficace aux bornes de la charge devant être raccordée, pour la mise en oeuvre du procédé selon les revendications 1 à 4, caractérisé en ce que le dispositif (1) comporte un dispositif ampèremétrique (4) situé dans le circuit de charge, un dispositif d'autorisation de mesure (8) qui coopère avec un circuit de temporisation (9) et sert à autoriser la mesure au début de l'application d'une tension à la charge (5), pendant un intervalle de temps pouvant être prédéterminé de manière à détecter de façon sélective la valeur crête ou la valeur maximale du courant actif lors une application réduite de tension, ainsi qu'un dispositif (10) d'évaluation de mesure pour un contrôle préalable de la charge.

6. Dispositif selon la revendication 5, caractérisé en ce que le dispositif (10) d'évaluation de mesure comporte un comparateur (23) possédant une entrée pour la valeur réelle du courant ainsi qu'une entrée pour la valeur limite préréglable du courant, et que la valeur limite du courant peut être commutée et notamment peut être accrue pour une application complète de la tension, d'une part pour le contrôle préalable de la charge et d'autre part pour le cas de fonctionnement normal avec une application complète de la tension à la charge.

7. Dispositif selon la revendication 6, caractérisé en ce que pour la commutation de la valeur limite du courant dans le comparateur (23) il est prévu un interrupteur électronique (27), qui est relié selon une liaison de commande notamment à l'unité de commande d'exécution (7), et que cet interrupteur est raccordé de préférence à une résistance additionnelle (26) servant à modifier le diviseur de tension branché à l'entrée de la valeur limite du courant.

8. Dispositif selon l'une des revendications 5 à 7, caractérisé en ce qu'en plus du dispositif de mesure du courant actif, il est prévu un dispositif (35) de mesure du courant actif comportant un circuit de temporisation (36) commandé par l'unité de commande à découpage de phase (6), et un dispositif (37) d'autorisation de mesure, commandé par ce circuit de temporisation et servant à autoriser la mesure au début d'un passage par zéro de la tension, pendant un intervalle de temps pouvant être prédéterminé, ainsi qu'un dispositif (39) d'évaluation de mesure du courant réactif.

9. Dispositif selon l'une des revendications 5 à 8, caractérisé en ce que le circuit de réglage (3a) situé dans le circuit de charge est constitué par le montage en parallèle d'un thyristor (15) servant à appliquer une tension de valeur efficace réduite pendant le contrôle de la charge, et d'un interrupteur électromagnétique (52), et qu'il est prévu un dispositif de commande (53) pour activer en temps opportun l'interrupteur électromagnétique (52).

10. Dispositif selon l'une des revendications 5 à 8, caractérisé en ce que le circuit de réglage (3b) comporte deux thyristors (15,15a) branchés selon un montage antiparallèle pour les processus de fermeture et d'ouverture dans le circuit de charge ainsi qu'un interrupteur électromagnétique (52) pouvant être raccordé après une opération de fermeture ou être débranché avant une opération d'ouverture.

11. Dispositif selon la revendication 9, caractérisé en ce qu'il est rendu indépendant de fluctuations du réseau, par le fait que l'instant (t_{S}) d'alimentation en courant de l'interrupteur électromécanique (52) est rendu dépendant de l'instant d'alimentation en courant de la charge (5), après que cette dernière ait atteint le seuil du courant réactif.
